# EUROPÄISCHE PATENTANMELDUNG

(11) **EP 0 933 314 A2**
(43) Veröffentlichungstag der Anmeldung: **04.08.1999**
(21) Anmeldenummer: 99810075.4
(22) Anmeldetag: 29.01.1999
(51) Int. Cl.: B65G 1/06

(54) **Kanalfahrzeug für ein automatisches Lager**

(30) Priorität: 02.02.1998 DE 2400498
(71) Anmelder: Manitec Consulting AG, 6048 Horw (CH)
(72) Erfinder: Koller, Hans, 6048 Horw (CH); Mathys, André, 6372 Ennetmoos (CH)
(74) Vertreter: Groner, Manfred

(57) **Zusammenfassung**

Das Kanalfahrzeug dient für ein automatisches Lager, das zum Ein- und Auslagern palettierter Güter (19) einen Fahrmotor (17) und eine Hubvorrichtung (9, 10) aufweist und schienengebunden in Kanälen des Lagers quer zur Transportrichtung eines Mutterfahrzeuges verfahrbar ist. Der Fahrmotor (17) ist gleichzeitig auch der Antrieb für die Hubvorrichtung (9, 10). Vorzugsweise führt der Fahrmotor (17) mittels wenigstens einer Kurvenrolle (9) den Hub aus. Die Erfindung ermöglicht es, die Bauhöhe und das Gewicht des Fahrzeugs wesentlich zu vermindern.

## Beschreibung

Die Erfindung betrifft ein Kanalfahrzeug für ein automatisches Lager, das zum Ein- und Auslagern palettierter Güter einen Fahrmotor und eine Hubvorrichtung aufweist und schienengebunden in Kanälen des Lagers quer zur Transportrichtung eines Mutterfahrzeuges verfahrbar ist.

Solche Fahrzeuge sind insbesondere für die Kompaktlagerung bekannt und haben sich in der Praxis an sich bewährt. Zur Ausnutzung des vorhandenen Raumvolumens sollte die Bauhöhe dieser Fahrzeuge möglichst klein sein. Zudem ist es erwünscht, dass bei minimalem Gewicht des Fahrzeuges eine hohe Beschleunigung möglich ist.

Der Erfindung liegt die Aufgabe zugrunde, ein Fahrzeug der genannten Art zu schaffen, das bei geringerem Gewicht und minimaler Bauhöhe höher beschleunigt und verzögert werden kann. Die Aufgabe ist bei einem gattungsgemässen Kanal fahrzeug dadurch gelöst, dass der Fahrmotor auch der Antrieb für die Hubvorrichtung ist.

Beim erfindungsgemässen Fahrzeug ist der Fahrmotor auf den Hubvorgang ausgelegt und daher zum Fahren an sich überdimensioniert. Diese Überdimensionierung des Fahrmotores ermöglicht nun eine höhere Beschleunigung und Verzögerung als bisher. Da zeitweise inaktive Motoren für den Hubvorgang nicht erforderlich sind und dadurch auch Bauteile weggelassen werden können, lässt sich das Gewicht und die Bauhöhe des Fahrzeuges wesentlich vermindern.

Wird gemäss einer Weiterbildung der Erfindung die Hubvorrichtung mit seiner Kurvenrolle betätigt, so kann die Bauhöhe des Fahrzeuges wesentlich vermindert werden. Die sonst übliche Bauhöhe von 160 bis 200 mm kann beispielsweise auf etwa 90 mm reduziert werden. Bei einem grossen Lager kann dadurch wesentlich Bauvolumen eingespart werden.

Ist das Fahrzeug als Raupenfahrzeug ausgebildet und übertragen die Raupen die Kraft des Fahrmotors auf die Hubvorrichtung, so kann der Spalt zwischen dem Mutterfahrzeug und dem Regal sicherer als bisher überfahren werden.

Bei einem Kanalfahrzeug ist die Bremssicherheit ausserordentlich wichtig. Diese Sicherheit ist dann wesentlich höher, wenn gemäss einer Weiterbildung der Erfindung zwei Fahrmotoren vorgesehen sind. Bei einem Ausfall des einen Motors kann der andere Motor für ein sicheres Anhalten des Fahrzeuges am Kanalende eingesetzt werden.

Die bisher übliche Stromversorgung mit Schleppkabel oder Akkumulator ist dann bei geringerem Unterhalt und Verfügbarkeit gewährleistet, wenn gemäss einer Weiterbildung der Erfindung für die Stromzuführung Stromabnehmer vorgesehen sind, die den Strom von zwei Fahrschienen abnehmen. Der für den Schleppkanal unvermeidliche Verschleiss und der hohe Platzbedarf wird vermieden. Ebenfalls ist der bei Akkumulatoren notwendige Stillstand zum Aufladen nicht notwendig.

Weitere vorteilhafte Merkmale ergeben sich aus den abhängigen Patentansprüchen, der nachfolgenden Beschreibung und der Zeichnung.

Ein Ausführungsbeispiel der Erfindung wird nachfolgend anhand der Zeichnung näher erläutert. Es zeigen:
Figur 1 eine räumliche Ansicht eines erfindungsgemässen Fahrzeuges,
Figur 2 schematisch einen Kanalquerschnitt,
Figur 3 eine Ansicht der Unterseite des erfindungsgemässen Fahrzeuges, wobei aus zeichnerischen Gründen Teile weggelassen sind, und
Figuren 4 bis 7 Teilansichten des erfindungsgemässen Kanal fahrzeuges.

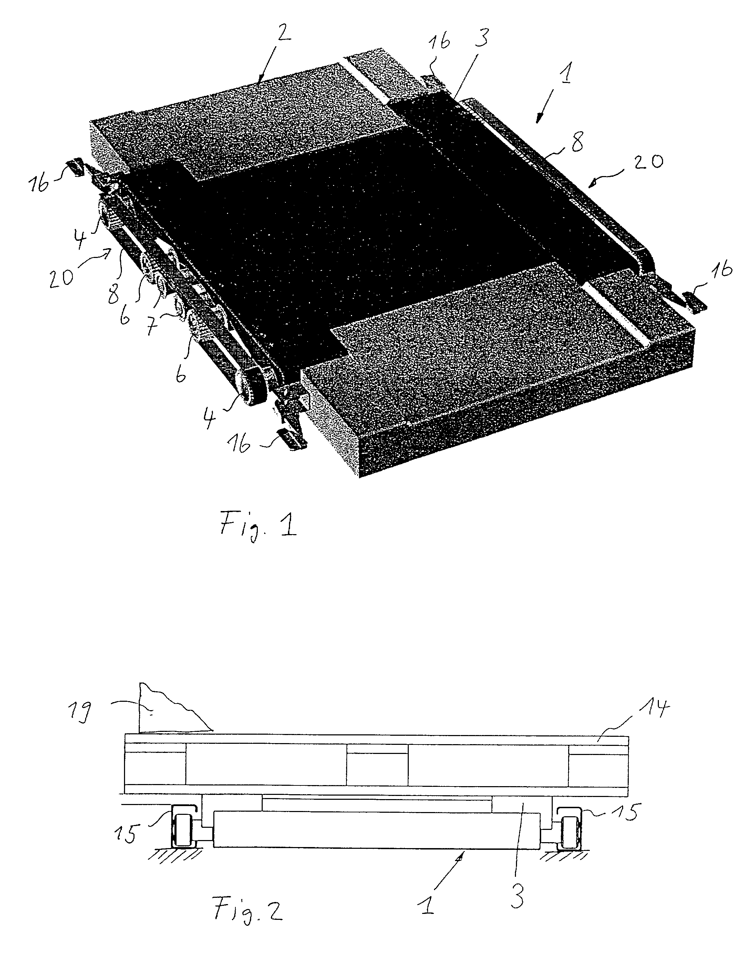

Das in Figur 1 gezeigte Kanalfahrzeug 1 besitzt ein flaches und im wesentlichen rechteckiges Gestell 2, in dem ein Hubtisch 3 gelagert ist. Das Fahrzeug 1 ist gemäss Figur 2 in Schienen 15 verfahrbar, die im Querschnitt wie ersichtlich C-förmig sind. In den Schienen 15 sind diese Fahrzeuge 1 mit zwei Raupen 20 verfahrbar. Die Steuerung solcher Fahrzeuge 1 ist an sich bekannt und wird hier deshalb nicht näher erläutert.

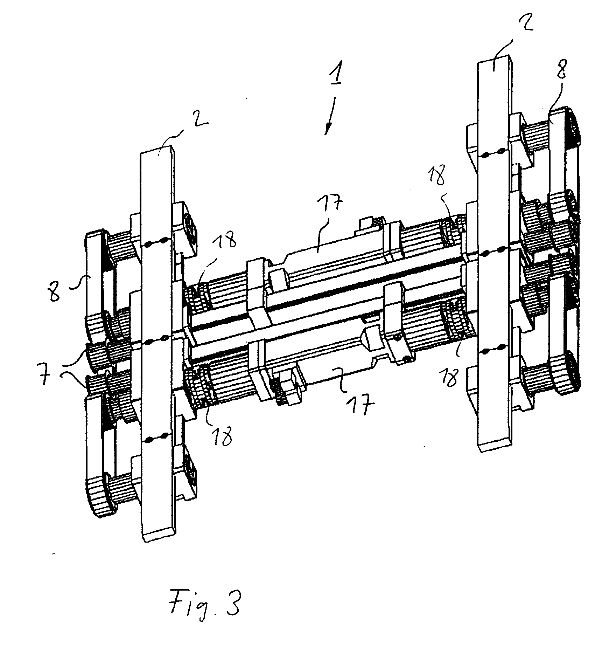

Unterhalb des Hubtisches 3 sind im Gestell 2 zwei Elektromotoren 17 gelagert, mit denen die endlosen Zahnriemen 8 der Raupen 20 angetrieben werden. Die Riemen 8 sind vorzugsweise Zahnriemen, können aber auch Zahnketten oder andere geeignete Organe sein. Für den Eingriff der Motoren 17 an den Zahnriemen 8 weisen diese jeweils Rollen 6 mit einer äusseren Zahnung 13 auf, die jeweils mit der Zahnung des Zahnriemens 8 kämmen. Die Zahnriemen 8 sind jeweils um zwei im Abstand zueinander angeordnete Schlaufachsen 4 gelegt, die ebenfalls eine äussere Zahnung 5 aufweisen und mit dem Zahnriemen 8 kämmen. Diese Achsen 4 mit den entsprechenden Rädern sind Fahr- und zugleich Spannachsen. Die Zahnriemen 8 werden durch die beiden Motoren 17 angetrieben. Je nach der Drehrichtung dieser Achsen 6 fährt das Fahrzeug 1 in den Schienen 15 in der einen oder anderen Richtung. Die mit dem Zahnriemen 8 kämmenden Räder 21 werden dann selbstverständlich alle in der gleichen Richtung gedreht. Diese Räder 21 sind gemäss Figur 3 jeweils über ein Planetengetriebe 18 mit dem entsprechenden Motor 17 verbunden.

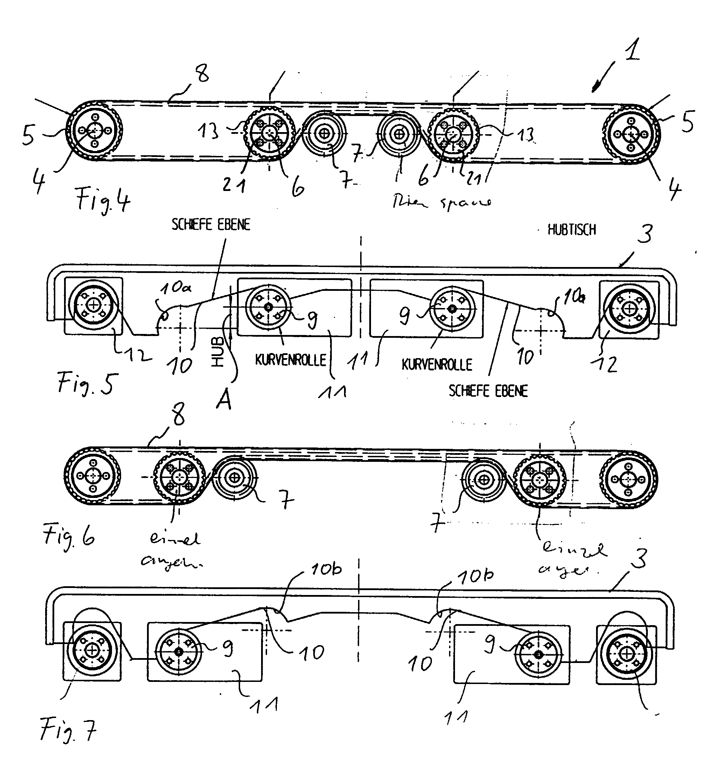

Wie die Figuren 4 und 6 zeigen, werden die Zahnriemen 8 jeweils mit zwei Rollen 7 gespannt. Diese Spannrollen 7 sind jeweils mit einem Motor 17 mit zwei Lagergehäusen 11 horizontal verschiebbar am Gestell 2 gelagert. Auf jedem Lagergestell 11 ist zudem eine Kurvenrolle 9 gelagert, wie beispielsweise die Figur 5 zeigt. Diese Kurvenrollen 9 sind jeweils an eine schiefe Ebene 10 des Hubtisches 3 angelegt und zwischen zwei Anschlägen 10a und 10b bewegbar. Mit diesen Kurvenrollen 9 kann der Hubtisch 3 angehoben und abgesenkt werden, wie nachfolgend anhand der Figuren 4 bis 7 näher erläutert wird.

In der Figur 5 befindet sich der Hubtisch 3 in der unteren Lage. Die Kurvenrollen 9 befinden sich jeweils an einem Anschlag 10b. Werden nun die Räder 21 der beiden Motoren 17 in entgegengesetzter Richtung gedreht, und zwar in Figur 4 das linke Rad 21 im Gegenuhrzeigersinn und das rechte Rad 21 im Uhrzeigersinn, so werden die beiden Lagergehäuse 11 mit den Spannrollen 7 und den Kurvenrollen 9 auseinander und in die in Figur 7 gezeigte Position bewegt. Die Zahnriemen 8 werden hierbei nicht bewegt und das Fahrzeug 1 steht still. Durch den Ablauf der lediglich horizontal und nicht vertikal bewegbaren Kurvenrollen 9 auf den schiefen Rollen 10 wird der Hubtisch 3 vertikal in die in Figur 7 gezeigte Lage angehoben. Da die Räder 21 mit den Zahnriemen 8 kämmen, ist auf die Kurvenrollen 9 und damit auf den Hubtisch 3 eine hohe Kraft ausübbar. Die Zahnriemen 8 ermöglichen somit, durch den Zahneingriff ohne die Gefahr eines Durchdrehens der Antriebsräder die Hubkraft zu erreichen. Die Endanschläge 10a bilden wie ersichtlich Vertiefungen in den Kurven 10, in welchen die Kurvenrollen 9 eingerastet sind. Werden nun die Räder 21 gleichsinnig gedreht, so kann das Fahrzeug mit angehobenem Hubtisch in der einen oder anderen Richtung verfahren werden. Die eingerasteten Rollen halten hierbei den Hubtisch 3 in der angehobenen Lage. Zum Absenken des Hubtisches 3 werden die Räder 21 wieder im entgegengesetzten Sinn gedreht. Die Rollen 9 werden hierbei wieder in die in Figur 5 gezeigte Lage gebracht.

Die beiden Motoren 7 sind wie erwähnt Elektromotoren. Die Stromversorgung erfolgt hier über die beiden Schienen 15. Die eine dieser Schienen 15 ist gegenüber dem hier nicht gezeigten Lagergestell isoliert und bildet die positive Phase. Die andere Fahrschiene 15 bildet den Nullleiter. Die Spannung an den Fahrschienen 15 beträgt aus Sicherheitsgründen weniger als 50 Volt. Zur Erhöhung der Spannung sind im Fahrzeug 1 entsprechende Transformatoren angeordnet. Die Stromübertragung zum Fahrzeug 1 erfolgt mit vier in Figur 1 gezeigten Stromabnehmern 16, die seitlich am Gestell 2 angeordnet sind. Durch diese Stromversorgung werden Schleppkabel und Akkumulatoren überflüssig.

## Patentansprüche

1. Kanalfahrzeug für ein automatisches Lager, das zum Ein- und Auslagern palettierter Güter (19) einen Fahrmotor (17) und eine Hubvorrichtung (9, 10) aufweist und schienengebunden in Kanälen des Lagers quer zur Transportrichtung eines Mutterfahrzeuges verfahrbar ist, dadurch gekennzeichnet, dass der Fahrmotor (17) auch der Antrieb für die Hubvorrichtung (9, 10) ist.

2. Fahrzeug nach Anspruch 1, dadurch gekennzeichnet, dass der Fahrmotor (17) mittels wenigstens einer Kurvenrolle (9) den Hub ausführt.

3. Fahrzeug nach Anspruch 2, dadurch gekennzeichnet, dass die Kurvenrolle (9) für den Hub mit einer schiefen Ebene (10) eines Hubtisches (3) zusammenarbeitet.

4. Fahrzeug nach einem der Ansprüche 1 bis 3, dadurch gekennzeichnet, dass wenigstens ein Zahnriemen oder eine Zahnkette oder dergleichen vorgesehen ist, welche den Fahrmotor (17) mit der Hubvorrichtung (9, 10) verbindet.

5. Fahrzeug nach einem der Ansprüche 1 bis 4, dadurch gekennzeichnet, dass es als Raupenfahrzeug ausgebildet ist und die Raupe (20) für den Hub die Kraft des Fahrmotors (17) auf die Hubvorrichtung (9, 10) überträgt.

6. Fahrzeug nach einem der Ansprüche 1 bis 5, dadurch gekennzeichnet, dass zwei Fahrmotoren (17) vorgesehen sind, die einzeln angetrieben sind und die für den Hub horizontal und relativ zueinander verschiebbar am Gestell (2) geführt sind.

7. Fahrzeug nach Anspruch 6, dadurch gekennzeichnet, dass die beiden Motoren (17) über zwei Zahnriemen (8) oder Zahnketten oder dergleichen miteinander verbunden sind.

8. Fahrzeug nach Anspruch 6 oder 7, dadurch gekennzeichnet, dass jeder Fahrmotor (17) für den Hub mit wenigstens einer Kurvenrolle (9) verbunden ist.

9. Fahrzeug nach einem der Ansprüche 1 bis 8, dadurch gekennzeichnet, dass für den Hub Antriebsräder (21) in entgegengesetzter Richtung und für die Fahrbewegung in gleicher Richtung drehbar sind.

10. Fahrzeug nach einem der Ansprüche 6 bis 9, dadurch gekennzeichnet, dass zwei Laufachsen (4) zwischen diesen zwei Antriebsachsen (6) und wieder zwischen diesen zwei Spannrollen (7) angeordnet sind und diese Achsen (4, 6) und Rollen (7) mit einem endlosen Antriebsorgan (8) verbunden sind, wobei dieses Antriebsorgan (8) gleichzeitig eine Fahrraupe ist.

11. Fahrzeug nach einem der Ansprüche 1 bis 10, dadurch gekennzeichnet, dass für die Stromzuführung zum Fahrzeug (1) Stromabnehmer (16) vorgesehen sind, die den Strom von zwei Fahrschienen (15) abnehmen, wobei die eine Fahrschiene (15) gegenüber dem Lagergestell isoliert ist und die positive Phase führt und die andere Fahrschiene (15) den Nullleiter bildet und dass die Spannung an den Fahrschienen (15) weniger als etwa 50 Volt beträgt.
